# FASCICULE DE BREVET EUROPEEN

(11) **EP 3 495 693 B1**
(45) Date de publication et mention de la délivrance du brevet: **18.02.2026**
(21) Numéro de dépôt: 18210681.5
(22) Date de dépôt: 06.12.2018
(51) Int. Cl.: F16H 57/04

(54) **MOTO-RÉDUCTEUR POUR SYSTÈME D'ESSUYAGE DE VÉHICULE AUTOMOBILE**
GETRIEBEMOTOR FÜR WISCHSYSTEM EINES KRAFTFAHRZEUGS
GEAR MOTOR FOR MOTOR VEHICLE WIPING SYSTEM

(30) Priorité: 08.12.2017 FR 1761817
(43) Date de publication de la demande: 12.06.2019
(73) Titulaire: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Visibility

(56) Documents cités:
- DE-A1- 102012 105 748
- DE-A1- 102012 211 080
- US-A1- 2009 136 357

## Description

L'invention est relative à un moto-réducteur pour système d'essuyage de véhicule automobile.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

Un tel moto-réducteur trouve une application particulière dans un système d'essuyage de véhicule automobile comprenant un ou plusieurs balais d'essuyage, un mécanisme d'embiellage pour l'entrainement du ou des balais d'essuyage selon un mouvement de va et vient, ledit arbre de sortie du moto-réducteur entrainant le mécanisme d'embiellage du système d'essuyage.

Bien souvent le mécanisme réducteur est un couple vis sans fin /roue dentée, la vis sans fin typiquement métallique étant solidaire de l'arbre de rotation du rotor, la roue dentée étant solidaire de l'arbre de sortie du moto-réducteur, typiquement en plastique.

Des paliers tels que des roulements à billes, typiquement au nombre de deux ou trois sont utilisés pour guider en rotation l'arbre de rotation, chaque roulement à billes comportant une bague intérieure et une bague extérieure, et des billes aptes à rouler sur un chemin de la bague intérieure et sur un chemin de la bague extérieure.

Selon les constatations de l'inventeur, il est encore à noter qu'un réducteur constitué par un couple vis sans fin/roue dentée présente un faible rendement de transmission de puissance, voisin de 65%, la puissance perdue (*i.e.* 35%) se dissipant sous forme de chaleur dans la vis-sans fin et l'arbre de rotation en métal. Selon l'opinion de l'inventeur, les moto-réducteurs tels que connus de l'état de la technique peuvent être de refroidissement sensiblement amélioré.

DE 10 2012 211 080 A1 et DE 10 2012 105 748 A1 décrivent des moto-réducteurs pour système d'essuyage de véhicule automobile tels que connus dans l'état de la technique.

Le but de la présente invention est de pallier les inconvénients précités en proposant un moto-réducteur à couple vis-sans fin/roue dentée, de refroidissement optimisé.

Un autre but de la présente invention est de proposer un tel moto-réducteur permettant d'obtenir une bonne compacité selon l'axe longitudinal de l'arbre de rotation.

D'autres buts et avantages apparaitront au cours de la description qui n'est donnée qu'à titre indicatif et qui n'a pas pour but de la limiter.

Aussi l'invention est relative à un moto-réducteur pour système d'essuyage de véhicule automobile comprenant :
- un moteur électrique comportant :
   - un rotor comprenant des éléments magnétiques,
   - un stator présentant des bobines d'excitation électromagnétique du rotor,
   - un arbre de rotation solidaire du rotor,
- un mécanisme réducteur reliant l'arbre de rotation et un arbre de sortie du moto-réducteur,
- un carter formant une enveloppe de protection pour ledit mécanisme réducteur, voire le moteur électrique,
et dans lequel ledit mécanisme réducteur comprend un système vis sans fin /roue dentée, la vis sans fin étant solidaire de l'arbre de rotation du rotor, la roue dentée (31) solidaire d'un arbre de sortie du moto-réducteur,
- des moyens formant paliers assurant le guidage en rotation de l'arbre de rotation du rotor par rapport au carter.
éventuellement, un dispositif de détermination de la position angulaire du rotor comprenant un aimant multipolaire solidaire de l'arbre de rotation du rotor,

Selon l'invention, le moto-réducteur comprend au moins un dissipateur de chaleur, sous la forme d'un élément saillant radialement de l'arbre de rotation, distinct des moyens formant paliers, et distinct de l'éventuel aimant multipolaire,
et dans lequel lesdits moyens formant paliers comprennent un palier pour le guidage de l'arbre de rotation côté stator du moteur électrique par référence à ladite vis sans fin, dit roulement côté stator, ledit palier est disposé interne à l'ensemble rotor et stator, logé dans un évidement interne au rotor,
et dans lequel lesdits moyens formant paliers comprennent un palier pour le guidage de l'extrémité de l'arbre de rotation opposée au côté du stator du moteur électrique suivant la direction de l'arbre de rotation, et par référence à ladite vis sans fin et dans lequel ledit dissipateur de chaleur est disposé à proximité de la vis sans fin sur ledit arbre de rotation, dans une position intermédiaire entre la vis sans fin et ledit palier côté opposé au stator du moteur électrique, ledit dissipateur de chaleur comprenant une portée interne pour le montage sur l'arbre de rotation, ledit élément étant configuré pour former une surface d'échange thermique avec l'atmosphère interne au carter,
et dans lequel ledit dissipateur de chaleur comprend une surface périphérique située localement en regard de la roue dentée, inclinée par rapport à l'axe de l'arbre de rotation et de sorte à être orientée localement sensiblement tangentiellement à la roue dentée.

Selon des caractéristiques optionnelles de l'invention, prises seules ou en combinaison :
- ledit dissipateur de chaleur est disposé à proximité immédiate de la roue dentée, ladite surface périphérique située à une distance Δ inférieure ou égale à 4 mm de la roue dentée 31 lors de sa rotation, de préférence inférieure ou égale à 3 mm ;
- la dimension en largeur du dissipateur de chaleur suivant l'axe de l'arbre de rotation est supérieure ou égale à 0,8 fois le diamètre de l'arbre de rotation au droit du dissipateur de chaleur ;
- le dissipateur de chaleur est dans un matériau de conductivité thermique supérieure ou égale à 1 W.m⁻¹.K⁻¹ ;
- le matériau dudit au moins un dissipateur de chaleur est métallique ou alternativement lequel le matériau dudit au moins un dissipateur de chaleur est un plastique chargé en particules métalliques ;
- les moyens formant paliers étant de diamètre extérieur D, le diamètre extérieur dudit dissipateur de chaleur est supérieur ou égal à 0,6 D ;
- les moyens formant paliers comprennent uniquement le palier (côté stator et le palier (24) du côté opposé au stator assurant respectivement le guidage des deux extrémités de l'arbre de rotation ;
- ledit dissipateur de chaleur présente des ailettes ;
- les ailettes sont agencées autour de l'axe de rotation du dissipateur de chaleur et configurées de manière à constituer des pales de ventilation, montées solidaires en rotation avec l'arbre de rotation.

L'invention concerne encore uns système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie entraine le mécanisme d'embiellage.

L'invention sera mieux comprise à la lecture de la description suivante accompagnée des dessins en annexe parmi lesquels :

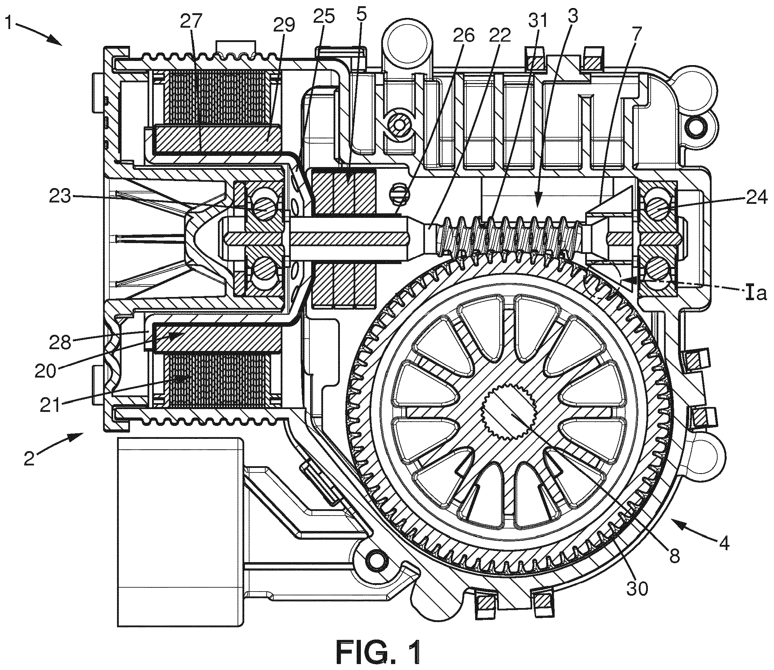

- La figure 1 est une vue de coupe selon un plan parallèle à l'axe de l'arbre de rotation du moteur, illustrant le moto-réducteur conforme à l'invention selon un mode de réalisation, y compris le stator, le rotor et l'arbre de rotation, le couple vis sans fin /roue dentée, ledit aimant multipolaire et de manière notable, solidaire de l'arbre de rotation, le dissipateur de chaleur, sous forme d'un élément plein disposé à proximité de la vis, disposé entre la vis sans fin et le palier assurant le guidage de l'extrémité de l'arbre de rotation situé du côté opposé au stator,
- La figure 1a est une vue de détail du cadre Ia de la figure 1, illustrant la distance Δ entre le dissipateur de chaleur et la roue dentée
- Les figures 2 et 3 sont des vues de côté et de face d'un dissipateur de chaleur à ailettes qui est peut être utilisé en remplacement de celui à élément plein illustré dans le moto-réducteur de la figure 1,

Aussi l'invention concerne un moto-réducteur 1 pour système d'essuyage de véhicule automobile comprenant :
- un moteur électrique 2 comportant :
   - un rotor 20 portant des éléments magnétiques 29, tels que des aimants permanents,
   - un stator 21 présentant des bobines d'excitation électromagnétique du rotor,
   - un arbre de rotation 22 solidaire du rotor,
- un mécanisme réducteur 3 reliant l'arbre de rotation 22 et un arbre de sortie 8 du moto-réducteur.

Un carter 4, typiquement métallique peut former une enveloppe de protection pour ledit mécanisme réducteur 3, voire le moteur électrique 2.

Le moteur électrique peut être à courant continu sans balai. Un tel moteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Le moto-réducteur peut éventuellement comprendre un dispositif de détermination de la position angulaire du rotor comprend à cet effet un aimant multipolaire 5 solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

Le mécanisme réducteur 3 comprend un couple vis sans fin 30 /roue dentée 31, la vis sans fin solidaire de l'arbre de rotation 22 du rotor 20, la roue dentée 31 solidaire de l'arbre de sortie 8 du moto-réducteur. Cet arbre de sortie 8 est sensiblement perpendiculaire à l'arbre de rotation 22 du moteur électrique 2. Le filet de la vis sans fin 30 peut être obtenu à partir de la matière venant de l'arbre de rotation 22, typiquement en métal. La roue dentée 31 peut être typiquement en matière plastique.

Le guidage en rotation de l'arbre de rotation du rotor 22 par rapport au carter 4 est assuré par des moyens formant paliers 23, 24. Les paliers 23, 34 utilisés peuvent être des roulements, des coussinets, ou toute autre forme de paliers connue de l'homme du métier.

Dans un tel moto-réducteur 1, les frottements générés entre la vis sans fin 30 et la roue dentée 31 du mécanisme réducteur 3 engendrent un échauffement important de la vis sans fin et de l'arbre de rotation 22.

L'invention s'intéresse toutefois ici à l'optimisation du refroidissement de la vis sans fin 30 et de l'arbre de rotation 22 du moteur électrique 2.

De manière notable, le moto-réducteur 1 comprend un dissipateur de chaleur 7, sous la forme d'un élément saillant radialement de l'arbre de rotation 22, distinct des moyens formant paliers 23,24, et distinct de l'éventuel aimant multipolaire 5. Ce dissipateur de chaleur 7 comprend une portée interne 70 pour le montage sur l'arbre de rotation 22, ledit élément étant configuré pour former une surface d'échange thermique avec l'atmosphère interne au carter 4/

On remarque encore que lesdits moyens formant paliers comprennent un palier 24 pour le guidage de l'extrémité de l'arbre de rotation opposée au côté du stator 21 du moteur électrique 2, suivant la direction de l'arbre de rotation 22, et par référence à ladite vis sans fin 30. Selon l'invention ledit dissipateur de chaleur 7 est disposé à proximité de la vis sans fin 30 sur ledit arbre de rotation 22, dans une position intermédiaire entre la vis sans fin 30 et ledit palier 24 côté opposé au stator du moteur électrique 2.

En fonctionnement, le dissipateur de chaleur 7 est configuré pour prélever la chaleur de l'arbre de rotation 22, à proximité de la vis sans fin 30, depuis sa portée interne 70 et transmettre les calories radialement jusqu'à la surface d'échange thermique dudit élément, susceptible d'être refroidie par l'atmosphère interne.

On remarque encore que ledit dissipateur de chaleur 7 comprend une surface périphérique 71 située localement en regard de la roue dentée 31, inclinée par rapport à l'axe de l'arbre de rotation 22 et de sorte à être orientée localement sensiblement tangentiellement à la roue dentée 31.

Ledit dissipateur de chaleur 7 est disposé à proximité immédiate de la roue dentée 31, ladite surface périphérique 71 située à une distance Δ de préférence inférieure ou égale à 4 mm de la roue dentée 31 lors de sa rotation, en particulier inférieure ou égale à 3 mm, voire inférieure ou égale à 2mm.

Cette surface périphérique inclinée 71 permet de maximiser autant que possible la surface d'échange de l'élément formant dissipateur de chaleur, en positionnant ledit élément saillant au plus près de la roue dentée 31. La largeur repérée 1 dudit dissipateur de chaleur 7, à savoir la dimension du dissipateur de chaleur suivant la direction de l'arbre de rotation, peut être supérieure est supérieure ou égale à 0,8 fois le diamètre de l'arbre de rotation au droit du dissipateur de chaleur (7).

Le dissipateur de chaleur peut être dans un matériau de conductivité thermique supérieure ou égale à 1 W.m⁻¹.K⁻¹. En particulier le matériau dudit dissipateur de chaleur 7 peut être métallique. Le matériau peut encore être un plastique chargé en particules métalliques.

Les moyens formant paliers étant de diamètre extérieur D, le diamètre extérieur dudit dissipateur de chaleur 7 peut être supérieur ou égal à 0,6 D, par exemple supérieur ou égal à 0,7 D, ou encore supérieur à 0,8 D. Le diamètre extérieur dudit au dissipateur de chaleur 7 peut être inférieur ou égal à 1,5 D, par exemple inférieur ou égal à 1,3 D.

Ledit dissipateur de chaleur 7 peut encore présenter des ailettes 73 formant la surface d'échange avec l'atmosphère interne. Selon un mode de réalisation, les ailettes 73 peuvent être agencées autour de l'axe de rotation du dissipateur de chaleur 7, et configurées de manière à constituer des pales de ventilation, montées solidaires en rotation avec l'arbre de rotation 22. Par exemple et lors du mouvement de l'arbre de rotation 22 autour de son axe, les pales de ventilations sont configurées pour créer un flux d'air pulsé.

Lesdits moyens formant paliers 23,24 peuvent comprendre un palier 23 pour le guidage de l'arbre de rotation côté stator 21 du moteur électrique 2 par référence à ladite vis sans fin 30, dit roulement côté stator. Selon un mode de réalisation, les moyens formant paliers comprennent uniquement le palier 23 côté stator et le palier 24 du côté opposé au stator, ces deux paliers 23, 24 assurant respectivement le guidage des deux extrémités de l'arbre de rotation 22.

De manière notable, le palier 23 de guidage du côté du stator peut être disposé interne à l'ensemble rotor 20 et stator 21, logé dans un évidement interne au rotor 20. Cette extrémité de l'arbre de rotation peut ainsi être avantageusement guidée par le palier 23, sans nécessiter une longueur d'arbre telle que son extrémité ressorte au-delà du rotor. D'autre part, le montage de ce palier 23 interne au rotor, ne nécessite pas de disposer d'une portée sur la section de longueur utile de l'arbre de rotation extérieur au rotor, et qui est déjà utilisée pour supporter la vis sans fin et/ou pour supporter l'aimant polaire 5 : cette section de longueur de l'arbre externe au rotor peut être réduite au minimum, et dans l'objectif d'augmenter la compacité du moto-réducteur suivant cette direction.

A cet effet, un support creux 25 peut porter lesdits éléments magnétiques 29 sur sa circonférence et est agencé de manière coaxiale et solidaire en rotation de l'arbre de rotation 22 : avantageusement ce support creux 25 vient coiffer ledit palier 23 qui assure le guidage de l'extrémité longitudinale de l'arbre de rotation 22 du côté du stator du moteur électrique 2.

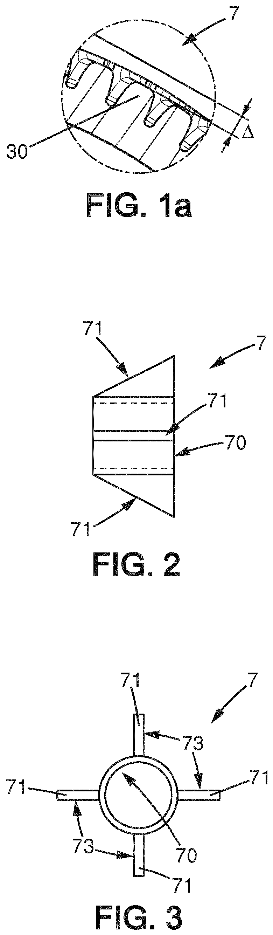

Ce support creux 25 peut encore s'étendre axialement au-delà de l'extrémité longitudinale de l'arbre de rotation 22, coté stator du moteur électrique. Cela permet en particulier de disposer lesdits éléments magnétiques 29 du rotor au moins partiellement au-delà de l'extrémité longitudinale de l'arbre de rotation 22, et comme illustré à titre d'exemple à la figure 3. Ce support creux est par exemple un corps de révolution qui comprend une partie creuse, tubulaire, de diamètre interne permettant d'y loger intérieurement le palier 23, voire une partie saillante du carter 4.

Ce support creux 25 peut comprendre encore un manchon 26 permettant la fixation du support creux 25 sur l'arbre de rotation 22. Ce manchon 26 vient se fixer dans une position sur l'arbre de rotation 22 intermédiaire entre le mécanisme réducteur 3 et le palier 23. Le diamètre intérieur du manchon 26 peut être ajusté au diamètre externe de l'arbre de rotation en cette position intermédiaire. Il peut s'agir d'un ajustement serré permettant un assemblage par frettage entre le support creux 25 et ledit arbre de rotation 22. Ce manchon 26 peut encore être fixé à l'arbre 22 par collage.

On remarque que l'aimant multipolaire 5 peut prendre la forme d'une bague montée autour de l'arbre de rotation. Les domaines magnétiques (nord/sud) s'étendent en alternance suivant la circonférence de la bague. Cet aimant multipolaire 5 peut être solidaire dudit support creux 25, agencé autour dudit manchon 26 de fixation dudit support creux 25.

Ledit support creux 25 comprend une section de longueur 27 de support des éléments magnétiques 29. Cette section 27 de longueur de support est sensiblement cylindrique. Les éléments magnétiques 29 du rotor sont solidarisés sur la paroi externe du cylindre. Un épaulement 28, en particulier sous forme d'une couronne, peut s'étendre radialement vers l'extérieur à l'extrémité distale de ladite section 27 de longueur de support des éléments magnétiques. Cet épaulement 28 forme une butée latérale pour lesdits éléments magnétiques 29 du rotor 20. Cet épaulement 28 facilite l'alignement des éléments magnétiques suivant une même ligne diamétrale.

On remarque encore que le support creux 25 présente une section de longueur de liaison reliant le manchon 26 et ladite section de longueur 27 de support, cylindrique, de plus grand diamètre que le manchon 26.

Le support creux 25 peut être constitué essentiellement par un élément d'un seul tenant, en particulier une tôle formée pour constituer consécutivement, le manchon 26, la section de liaison, la section 27 de support cylindrique, voire ledit épaulement 28.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie 8 entraine le mécanisme d'embiellage.

### NOMENCLATURE

1. Moto-réducteur,
2. Moteur électrique,
20. Rotor,
21. Stator,
22. Arbre de rotation,
23,24. Paliers, respectivement roulement côté du stator du moteur électrique, et roulement côté opposé au stator du moteur électrique
3. Mécanisme réducteur,
30. Vis sans fin,
31. Roue dentée,
4. Carter,
5. Aimant multipolaire,
7. Dissipateurs de chaleur disposé entre le palier côté opposé au stator du moteur électrique et la vis sans fin.
70. Portée interne du dissipateur de chaleur pour le montage sur l'arbre de rotation,
71. Surface périphérique inclinée, située à proximité immédiate de la roue dentée,
72. Support périphérique interne pour la bague de l'aimant multipolaire,
73. Ailettes, notamment pales de ventilation.

Δ. Distance séparant la roue dentée du dissipateur de chaleur

## Revendications

1. Moto-réducteur (1) pour système d'essuyage de véhicule automobile comprenant :
- un moteur électrique (2) comportant :
- un rotor (20) comprenant des éléments magnétiques,
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie du moto-réducteur,
- un carter (4) formant une enveloppe de protection pour ledit mécanisme réducteur, voire le moteur électrique (2),
et dans lequel ledit mécanisme réducteur (3) comprend un système vis sans fin /roue dentée, la vis sans fin (30) étant solidaire de l'arbre de rotation du rotor (22), la roue dentée (31) solidaire d'un arbre de sortie (8) du moto-réducteur,
- des moyens formant paliers (23, 24) assurant le guidage en rotation de l'arbre de rotation du rotor (22) par rapport au carter (4),
eventuellement, un dispositif de détermination de la position angulaire du rotor comprenant un aimant multipolaire (5) solidaire de l'arbre de rotation (22) du rotor (20),
et dans lequel le moto-réducteur (1) comprend au moins un dissipateur de chaleur (7), sous la forme d'un élément saillant radialement de l'arbre de rotation (22), distinct des moyens formant paliers (23,24), et distinct de l'éventuel aimant multipolaire (5),
et dans lequel lesdits moyens formant paliers (23,34) comprennent un palier (24) pour le guidage de l'extrémité de l'arbre de rotation opposée au côté du stator du moteur électrique (2) suivant la direction de l'arbre de rotation (2), et par référence à ladite vis sans fin (30) et dans lequel ledit dissipateur de chaleur (7) est disposé à proximité de la vis sans fin (30) sur ledit arbre de rotation (22), dans une position intermédiaire entre la vis sans fin (30) et ledit palier (24) côté opposé au stator du moteur électrique (2), ledit dissipateur de chaleur (7) comprenant une portée interne (70) pour le montage sur l'arbre de rotation (22), ledit élément étant configuré pour former une surface d'échange thermique avec l'atmosphère interne au carter (4),
et dans lequel ledit dissipateur de chaleur (7) comprend une surface périphérique (71) située localement en regard de la roue dentée (31), inclinée par rapport à l'axe de l'arbre de rotation (22) et de sorte à être orientée localement sensiblement tangentiellement à la roue dentée (31),
**caractérisé en ce que** lesdits moyens formant paliers (23, 24) comprennent un palier (23) pour le guidage de l'arbre de rotation côté stator (21) du moteur électrique (2) par référence à ladite vis sans fin (30), dit roulement côté stator, ledit palier (23) étant disposé interne à l'ensemble rotor (20) et stator (21, logé dans un évidement interne au rotor (20).

2. Moto-réducteur selon la revendication 1, dans lequel ledit dissipateur de chaleur (7) est disposé à proximité immédiate de la roue dentée (31), ladite surface périphérique (71) située à une distance (Δ) inférieure ou égale à 4 mm de la roue dentée (31) lors de sa rotation, de préférence inférieure ou égale à 3 mm.

3. Moto-réducteur selon la revendication 1 ou 2, dans lequel la dimension en largeur du dissipateur de chaleur (7) suivant l'axe de l'arbre de rotation (22) est supérieure ou égale à 0,8 fois le diamètre de l'arbre de rotation au droit du dissipateur de chaleur (7).

4. Moto-réducteur selon l'une des revendications 1 à 3, dans lequel ledit au moins un dissipateur de chaleur est dans un matériau de conductivité thermique supérieure ou égale à 1 W.m⁻¹.K⁻¹.

5. Moto-réducteur selon la revendication 4, dans lequel le matériau dudit au moins un dissipateur de chaleur est métallique.

6. Moto-réducteur selon la revendication 4, dans lequel le matériau dudit au moins un dissipateur de chaleur est un plastique chargé en particules métalliques.

7. Moto-réducteur selon l'une des revendications 1 à 6, dans lequel les moyens formant paliers étant de diamètre extérieur D, le diamètre extérieur dudit dissipateur de chaleur (7) est supérieur ou égal à 0,6 D.

8. Moto-réducteur selon l'une des revendications 1 à 7, dans lequel les moyens formant paliers comprennent uniquement le palier (23) côté stator et le palier (24) du côté opposé au stator assurant respectivement le guidage de l'arbre de rotation (22) par ses deux extrémités.

9. Moteur-réducteur selon l'une des revendications 1 à 8, dans lequel ledit dissipateur de chaleur (7) présente des ailettes (73).

10. Moteur réducteur selon la revendication 9 dans lequel les ailettes (73) sont agencées autour de l'axe de rotation du dissipateur de chaleur (7) et configurées de manière à constituer des pales de ventilation, montées solidaires en rotation avec l'arbre de rotation (22).

11. Système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'une quelconque des revendications 1 à 10 dont l'arbre de sortie (8) entraine le mécanisme d'embiellage.

## Patentansprüche

1. Getriebemotor (1) für ein Wischsystem eines Kraftfahrzeugs, umfassend:
- einen Elektromotor (2), der aufweist:
- einen Rotor (20), der magnetische Elemente umfasst,
- einen Stator (21), der elektromagnetische Erregerspulen des Rotors aufweist,
- eine Rotationswelle (22), die mit dem Rotor verbunden ist,
- einen Reduziermechanismus (3), der die Rotationswelle (22) und eine Ausgangswelle des Getriebemotors verbindet,
- ein Gehäuse (4), das eine Schutzhülle für den Reduziermechanismus und sogar den Elektromotor (2) bildet,
und wobei der Reduziermechanismus (3) ein Schneckengetriebe/Zahnradsystem umfasst, wobei die Schnecke (30) mit der Rotationswelle des Rotors (22) verbunden ist, das Zahnrad (31) mit einer Ausgangswelle (8) des Getriebemotors verbunden ist,
Mittel, die Lager (23, 24) bilden, die die Rotationsführung der Rotationswelle des Rotors (22) in Bezug auf das Gehäuse (4) gewährleisten,
gegebenenfalls eine Vorrichtung zur Bestimmung der Winkelposition des Rotors, die einen Multipol-Magneten (5) umfasst, der mit der Rotationswelle (22) des Rotors (20) verbunden ist,
und wobei der Getriebemotor (1) mindestens einen Wärmeableiter (7) in Form eines radial von der Rotationswelle (22) vorstehenden Elements umfasst, das sich von den lagerbildenden Mitteln (23, 24) unterscheidet und sich von dem eventuellen Multipol-Magneten (5) unterscheidet,
und wobei die lagerbildenden Mittel (23, 34) ein Lager (24) zur Führung des Endes der Rotationswelle umfassen, das der Seite des Stators des Elektromotors (2) in Richtung der Rotationswelle (2) gegenüberliegt, und unter Bezugnahme auf die Schnecke (30), und wobei der Wärmeableiter (7) in der Nähe der Schnecke (30) auf der Rotationswelle (22) angeordnet ist, in einer Zwischenposition zwischen der Schnecke (30) und dem Lager (24) auf der dem Stator des Elektromotors (2) gegenüberliegenden Seite, wobei der Wärmeableiter (7) einen inneren Sitz (70) zur Montage auf der Rotationswelle (22) umfasst, wobei das Element so konfiguriert ist, dass es eine Wärmeaustauschfläche mit der Atmosphäre innerhalb des Gehäuses (4) bildet,
und wobei der Wärmeableiter (7) eine Umfangsfläche (71) umfasst, die lokal dem Zahnrad (31) gegenüberliegt, geneigt zur Achse der Rotationswelle (22) und so, dass sie lokal im Wesentlichen tangential zum Zahnrad (31) ausgerichtet ist,
**dadurch gekennzeichnet, dass** die lagerbildenden Mittel (23, 24) ein Lager (23) zur Führung der Rotationswelle auf der Statorseite (21) des Elektromotors (2) unter Bezugnahme auf die Schnecke (30) umfassen, genannt statorseitiges Lager, wobei das Lager (23) innerhalb der Rotor- (20) und Stator- (21) Baugruppe angeordnet ist, eingebettet in einer internen Aussparung des Rotors (20).

2. Getriebemotor nach Anspruch 1, wobei der Wärmeableiter (7) in unmittelbarer Nähe des Zahnrads (31) angeordnet ist, wobei die Umfangsfläche (71) in einem Abstand (Δ) von weniger als oder gleich 4 mm vom Zahnrad (31) während seiner Rotation liegt, vorzugsweise weniger als oder gleich 3 mm.

3. Getriebemotor nach Anspruch 1 oder 2, wobei die Breitendimension des Wärmeableiters (7) entlang der Achse der Rotationswelle (22) größer oder gleich 0,8 mal dem Durchmesser der Rotationswelle an der Stelle des Wärmeableiters (7) ist.

4. Getriebemotor nach einem der Ansprüche 1 bis 3, wobei der mindestens eine Wärmeableiter aus einem Material mit einer Wärmeleitfähigkeit größer oder gleich 1 W.m-1.K-1 besteht.

5. Getriebemotor nach Anspruch 4, wobei das Material des mindestens einen Wärmeableiters metallisch ist.

6. Getriebemotor nach Anspruch 4, wobei das Material des mindestens einen Wärmeableiters ein mit Metallpartikeln gefüllter Kunststoff ist.

7. Getriebemotor nach einem der Ansprüche 1 bis 6, wobei die lagerbildenden Mittel einen Außendurchmesser D haben und der Außendurchmesser des Wärmeableiters (7) größer oder gleich 0,6 D ist.

8. Getriebemotor nach einem der Ansprüche 1 bis 7, wobei die lagerbildenden Mittel nur das Lager (23) auf der Statorseite und das Lager (24) auf der dem Stator gegenüberliegenden Seite umfassen, die jeweils die Führung der Rotationswelle (22) an ihren beiden Enden gewährleisten.

9. Getriebemotor nach einem der Ansprüche 1 bis 8, wobei der Wärmeableiter (7) Rippen (73) aufweist.

10. Getriebemotor nach Anspruch 9, wobei die Rippen (73) um die Rotationsachse des Wärmeableiters (7) herum angeordnet und so konfiguriert sind, dass sie Lüfterflügel bilden, die drehfest mit der Rotationswelle (22) verbunden sind.

11. Wischsystem für ein Kraftfahrzeug, umfassend einen oder mehrere Wischerblätter, einen Pleuelstangenmechanismus zum Antrieb des oder der Wischerblätter in einer Hin- und Herbewegung, sowie einen Getriebemotor nach einem der Ansprüche 1 bis 10, dessen Ausgangswelle (8) den Pleuelstangenmechanismus antreibt.

## Claims

1. Gear motor (1) for an automotive vehicle wiper system comprising:
- an electric motor (2) including:
- a rotor (20) comprising magnetic elements,
- a stator (21) having electromagnetic excitation coils for the rotor,
- a rotation shaft (22) integral with the rotor,
- a reducer mechanism (3) connecting the rotation shaft (22) and an output shaft of the gear motor,
- a housing (4) forming a protective envelope for said reducer mechanism, and even the electric motor (2),
and in which said reducer mechanism (3) comprises a worm gear/toothed wheel system, the worm gear (30) being integral with the rotation shaft of the rotor (22), the toothed wheel (31) integral with an output shaft (8) of the gear motor,
means forming bearings (23, 24) ensuring the rotational guidance of the rotation shaft of the rotor (22) relative to the housing (4),
optionally, a device for determining the angular position of the rotor comprising a multipolar magnet (5) integral with the rotation shaft (22) of the rotor (20),
and in which the gear motor (1) comprises at least one heat dissipator (7), in the form of an element radially protruding from the rotation shaft (22), distinct from the means forming bearings (23,24), and distinct from the optional multipolar magnet (5),
and in which said means forming bearings (23,34) comprise a bearing (24) for guiding the end of the rotation shaft opposite to the side of the stator of the electric motor (2) along the direction of the rotation shaft (2), and by reference to said worm gear (30) and in which said heat dissipator (7) is disposed in proximity to the worm gear (30) on said rotation shaft (22), in an intermediate position between the worm gear (30) and said bearing (24) on the side opposite to the stator of the electric motor (2), said heat dissipator (7) comprising an internal bearing surface (70) for mounting on the rotation shaft (22), said element being configured to form a heat exchange surface with the internal atmosphere of the housing (4),
and in which said heat dissipator (7) comprises a peripheral surface (71) locally situated facing the toothed wheel (31), inclined with respect to the axis of the rotation shaft (22) and so as to be locally oriented substantially tangentially to the toothed wheel (31),
**characterized in that** said means forming bearings (23, 24) comprise a bearing (23) for guiding the rotation shaft on the stator (21) side of the electric motor (2) by reference to said worm gear (30), said bearing on the stator side, said bearing (23) being disposed internal to the rotor (20) and stator (21) assembly, housed in a recess internal to the rotor (20).

2. Gear motor according to claim 1, in which said heat dissipator (7) is disposed in immediate proximity to the toothed wheel (31), said peripheral surface (71) situated at a distance (Δ) less than or equal to 4 mm from the toothed wheel (31) during its rotation, preferably less than or equal to 3 mm.

3. Gear motor according to claim 1 or 2, in which the width dimension of the heat dissipator (7) along the axis of the rotation shaft (22) is greater than or equal to 0.8 times the diameter of the rotation shaft at the location of the heat dissipator (7).

4. Gear motor according to any one of claims 1 to 3, in which said at least one heat dissipator is made of a material with thermal conductivity greater than or equal to 1 W.m-1.K-1.

5. Gear motor according to claim 4, in which the material of said at least one heat dissipator is metallic.

6. Gear motor according to claim 4, in which the material of said at least one heat dissipator is a plastic filled with metallic particles.

7. Gear motor according to any one of claims 1 to 6, in which the means forming bearings having an external diameter D, the external diameter of said heat dissipator (7) is greater than or equal to 0.6 D.

8. Gear motor according to any one of claims 1 to 7, in which the means forming bearings comprise only the bearing (23) on the stator side and the bearing (24) on the side opposite to the stator, respectively ensuring the guidance of the rotation shaft (22) by its two ends.

9. Gear motor according to any one of claims 1 to 8, in which said heat dissipator (7) has fins (73).

10. Gear motor according to claim 9 in which the fins (73) are arranged around the rotation axis of the heat dissipator (7) and configured to constitute ventilation blades, mounted integrally in rotation with the rotation shaft (22).

11. Automotive vehicle wiper system comprising one or more wiper blades, a linkage mechanism for driving the wiper blade(s) in a back-and-forth movement, as well as a gear motor according to any one of claims 1 to 10 whose output shaft (8) drives the linkage mechanism.
